# EUROPÄISCHE PATENTSCHRIFT

(11) **EP 3 118 058 B1**
(45) Veröffentlichungstag und Bekanntmachung des Hinweises auf die Patenterteilung: **19.09.2018**
(21) Anmeldenummer: 16172894.4
(22) Anmeldetag: 03.06.2016
(51) Int. Cl.: B60P 1/00, B60R 9/02

(54) **FAHRZEUGAUFBAU**
VEHICLE SUPERSTRUCTURE
STRUCTURE DE VÉHICULE

(30) Priorität: 17.07.2015 AT 506292015
(43) Veröffentlichungstag der Anmeldung: 18.01.2017
(73) Patentinhaber: Kässbohrer Transport Technik GmbH, 5301 Eugendorf (AT)
(72) Erfinder: EBERHARTINGER, Alexander, 5300 Hallwang (AT)
(74) Vertreter: Torggler & Hofinger Patentanwälte

(56) Entgegenhaltungen:
- GB-A- 2 488 831
- US-A- 4 613 155
- US-A1- 2002 189 503
- US-A1- 2010 230 210
- US-A1- 2012 318 178

## Beschreibung

Die vorliegende Erfindung betrifft einen Fahrzeugaufbau mit den Merkmalen des Oberbegriffs des Anspruchs 1 und ein Fahrzeug mit einem solchen Fahrzeugaufbau.
Ein nicht gattungsgemäßer Fahrzeugaufbau geht aus der US 2013/0180428 A1 hervor. Dieser Fahrzeugaufbau weist keinen Laufsteg auf, der als Laufsteg zwischen einer Verwahrstellung und einer Nutzstellung hin und her bewegbar wäre. Vielmehr sind eine Vielzahl einzeln angelenkter Stäbe vorgesehen, die in der Nutzstellung gemeinsam einen Laufsteg bilden, in der Verwahrstellung allerdings mehr oder weniger parallel zueinander liegen und daher nicht als Laufsteg angesehen werden können.
Aus der WO 2012/038992 A1 geht ein Fahrzeugaufbau hervor, bei welchem der Laufsteg fest mit der Absturzsicherung verbunden ist. Es ist also keine von einer Bewegungsvorrichtung gesonderte Verstellvorrichtung vorhanden. Die Nutzstellung des Laufstegs und die Ladestellung der Absturzsicherung bzw. die Verwahrstellung des Laufstegs und die Transportstellung der Absturzsicherung sind somit identisch.
Auch bei dem in der US 2012/0318178 A1 gezeigten, an einem LKW vorhandenen und durch eine Absturzsicherung abgesicherten Laufsteg sind Laufsteg und Absturzsicherung fest miteinander verbunden, sodass es hier keiner Koppelung bedarf, um die Positionen von Laufsteg und Absturzsicherung zu verändern.
Die US 2002/0189503 A1 zeigt einen an einem LKW angebrachten schwenkbaren Ladebereich, an dem eine faltbare Absturzsicherung in Form von schwenkbar miteinander verbundenen Geländerstangen angebracht ist. Mittels eines Hebels kann der Laufsteg geschwenkt werden, wodurch sich gleichzeitig die Absturzsicherung ein- bzw. ausfaltet.

In der gattungsgemäßen US 2010/0230210 A1 ist beispielhaft eine Art der Koppelung zwischen einer Trittfläche und einer Absturzsicherung gezeigt.
Die Druckschriften US 4,613,155 und GB 2488831 A1 zeigen weitere Beispiele von Fahrzeugaufbauten mit Absturzsicherung.

Die WO 2010/106380 A1 beschreibt einen weiteren Fahrzeugaufbau. Bei diesem Fahrzeugaufbau muss zuerst die Absturzsicherung aus der Transportstellung in die Ladestellung verfahren werden. Anschließend kann in der Ladestellung der Absturzsicherung der Laufsteg von der Verwahrstellung in die Nutzstellung geschwenkt werden. Nachteilig daran ist der relativ hohe Manipulationsaufwand.

Aufgabe der Erfindung ist die Bereitstellung eines gattungsgemäßen Fahrzeugaufbaus und eines mit einem solchen Fahrzeugaufbau versehenen Fahrzeugs, bei welchen dieses Problem nicht auftritt.

Diese Aufgabe wird durch einen Fahrzeugaufbau mit den Merkmalen des Anspruchs 1 und ein Fahrzeug mit einem solchen Fahrzeugaufbau gelöst. Vorteilhafte Ausführungsformen der Erfindung sind in den abhängigen Ansprüchen definiert.

Bei der Erfindung ist vorgesehen, dass die Bewegungsvorrichtung und die Verstellvorrichtung derart miteinander gekoppelt sind, dass bei einer Betätigung der Verstellvorrichtung eine Betätigung der Bewegungsvorrichtung erfolgt oder umgekehrt. Durch die Erfindung genügt ein einziger Betätigungsschritt um sowohl die Bewegungsvorrichtung für die Absturzsicherung als auch die Verstellvorrichtung für den Laufsteg auszulösen. Der Manipulationsaufwand ist gegenüber dem Stand der Technik reduziert.

Bevorzugt werden die Bewegungsvorrichtung und die Verstellvorrichtung annähernd gleichzeitig aktiv sein.

Weitere Vorteile und Einzelheiten der Erfindung werden für mehrere Ausführungsbeispiele anhand der Figuren erläutert. In Bezug auf eines der Ausführungsbeispiele diskutierten Merkmale können auch bei den anderen Ausführungsbeispielen angewandt werden.

Es zeigen:
- Fig. 1: ein erstes Ausführungsbeispiel eines erfindungsgemäßen Fahrzeugaufbaus in einem ersten Betriebszustand in einer perspektivischen Ansicht,
- Fig. 2: das Ausführungsbeispiel der Fig. 1 in einem zweiten Betriebszustand in einer perspektivischen Ansicht,
- Fig. 3a-3d: Heckansichten bzw. perspektivische Ansichten zu einem Detail der Fig. 1 bzw. 2,
- Fig. 4a-4d: eine Detailansicht des Fahrzeugaufbaus der vorangehenden Figuren in unterschiedlichen Betriebszuständen,
- Fig. 5: eine Detailansicht zu einem Ausführungsbeispiel der mechanischen Koppelungsvorrichtung,
- Fig. 6a,6b: perspektivische Ansichten zu einem weiteren Ausführungsbeispiel der Erfindung,
- Fig. 7: ein zweites Ausführungsbeispiel der Erfindung,
- Fig. 8a-8c: ein drittes Ausführungsbeispiel der Erfindung und
- Fig. 9a,9b: ein viertes Ausführungsbeispiel der Erfindung.

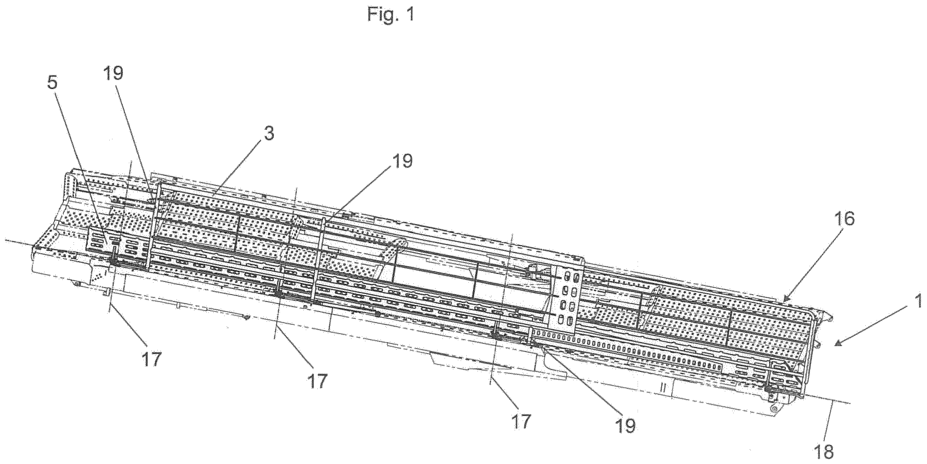

Fig. 1 zeigt einen Fahrzeugaufbau 1 für einen nicht dargestellten Lastkraftwagen. Der Ladebereich 16 ist hier als Hubbühne ausgebildet und dient dem Transport von nicht dargestellten Kraftfahrzeugen. Die Absturzsicherung 3 und der Laufsteg 5 können an beiden Seiten oder nur einer der Seiten des Fahrzeugaufbaus 1 vorgesehen sein.

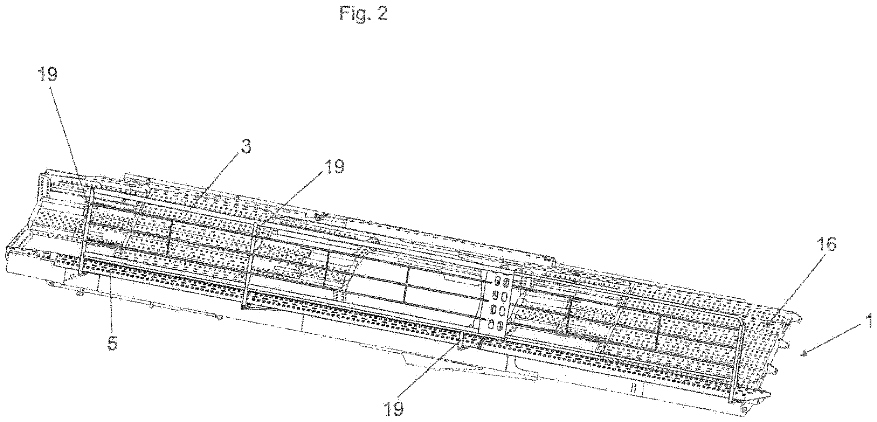

In Fig. 1 befindet sich die Absturzsicherung 3 in ihrer Transportstellung. In dieser Stellung befindet sie sich nahe am Ladebereich 16. Fig. 2 zeigt die Absturzsicherung 3 in der Ladestellung. In dieser Stellung befindet sie sich weiter weg vom Ladebereich 16, wodurch mehr Platz zwischen der Absturzsicherung 3 und dem Ladegut (hier: Kraftfahrzeuge) zur Verfügung steht, was im gewählten Beispiel das Öffnen der Türen der Kraftfahrzeuge erleichtert. Die Absturzsicherung 3 weist mehrere Steher 19 auf, die in diesem Ausführungsbeispiel jeweils um eine vertikale Achse 17 verschwenkbar am Ladebereich 16 gelagert sind. Zwischen den Stehern 19 sind horizontal verlaufende Elemente (Rohre, Seile oder dergleichen) angeordnet. Die Absturzsicherung 3 erstreckt sich in diesem Ausführungsbeispiel über die gesamte Länge des Ladebereichs 16. Alternativ könnten entlang der Längserstreckung des Ladebereichs 16 natürlich auch mehrere, hintereinander angeordnete Absturzsicherungen 3 vorgesehen sein. Es ist auch nicht unbedingt erforderlich, die gesamte Längserstreckung des Ladebereichs 16 mit einer Absturzsicherung 3 zu versehen.

Der Laufsteg 5 befindet sich im Betriebszustand der Fig. 1 in der Verwahrstellung und ist im vorliegenden Ausführungsbeispiel annähernd parallel an die Absturzsicherung 3 angeschwenkt. In der Fig. 2 befindet sich der Laufsteg 5 in der Nutzstellung und deckt den Bereich zwischen der Absturzsicherung 3 und dem Ladebereich 16 im Wesentlichen ab. Der Laufsteg 5 ist in diesem Ausführungsbeispiel um eine horizontale Achse 18 verschwenkbar am Ladebereich 16 gelagert. Der Laufsteg 5 ist in diesem Ausführungsbeispiel als zur Erhöhung der Rutschsicherheit geprägte Stahlkonstruktion ausgebildet und erstreckt sich über die gesamte Länge des Ladebereichs 16. Alternativ könnten entlang der Längserstreckung des Ladebereichs 16 natürlich auch mehrere, hintereinander angeordnete Laufstege 5 vorgesehen sein. Es ist auch nicht unbedingt erforderlich, die gesamte Längserstreckung des Ladebereichs 16 mit einem Laufsteg 5 zu versehen.

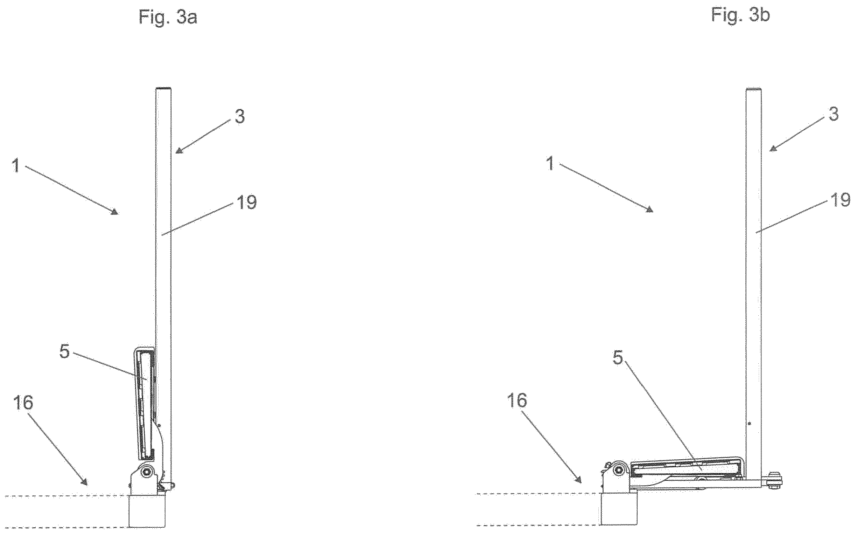

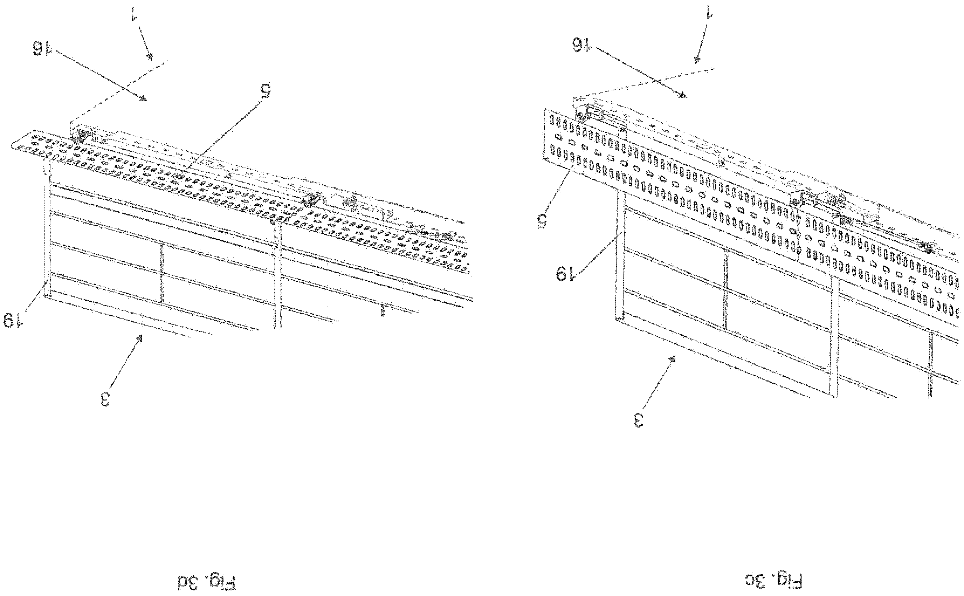

Die Fig. 3a und 3b zeigen Heckansichten zu den Fig. 1 bzw. 2. In Fig. 3a ist erkennbar, dass sich der Laufsteg 5 in seiner Verwahrstellung annähernd parallel zur Absturzsicherung 3 befindet. Die Absturzsicherung 3 befindet sich nahe am Ladebereich 16. In Fig. 3b ist erkennbar, dass sich der Laufsteg 5 in seiner Nutzstellung annähernd rechtwinklig zur Absturzsicherung 3 befindet und den Bereich zwischen Absturzsicherung 3 und Ladebereich 16 abdeckt. Die Absturzsicherung 3 befindet sich im Vergleich zur Fig. 3a am weitesten vom Ladebereich 16 entfernt. Die Fig. 3c und 3d zeigen die entsprechenden perspektivischen Ansichten.

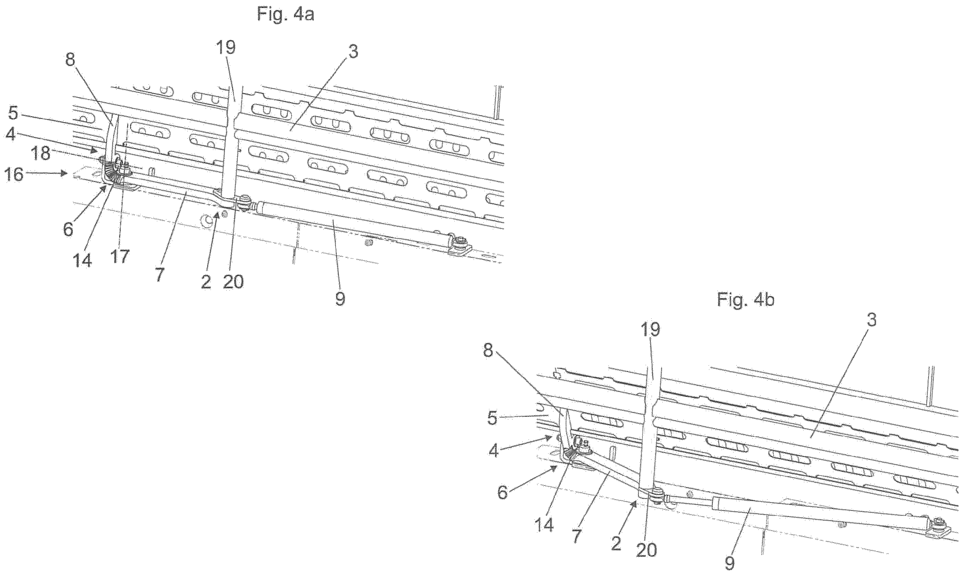

Die Abfolge der Fig. 4a-4d zeigen den Übergang vom Betriebszustand der Fig. 1 zu jenem der Fig. 2.

Das Hin und Herbewegen der Absturzsicherung 3 erfolgt durch eine Bewegungsvorrichtung 2, die in diesem Ausführungsbeispiel in Bezug auf jeden Steher 19 einen ersten Schwenkarm 7 aufweist, welcher jeweils um die vertikale Achse 17 verschwenkbar ist. Der erste Schwenkarm 7 ist einerseits mit dem Ladebereich 16 und andererseits mit der Absturzsicherung 3 verbunden, nämlich mit dem jeweiligen Steher 19.

Das Verstellen des Laufsteges 5 erfolgt durch eine Verstellvorrichtung 4, die in diesem Ausführungsbeispiel im Bereich jedes Stehers 19 einen zweiten Schwenkarm 8 aufweist, welcher jeweils um die horizontale Achse 18 verschwenkbar ist. Der zweite Schwenkarm 8 ist einerseits mit dem Ladebereich 16 und andererseits mit dem Laufsteg 5 verbunden.

Das Antreiben der Bewegungsvorrichtung 2 und der Verstellvorrichtung 4 erfolgt durch einen einzigen Motor, der in diesem Ausführungsbeispiel nur im Bereich eines Stehers 19 vorgesehen ist und eine Kolben-Zylinder-Einheit 9 aufweist, wobei die Kolben-Zylinder-Einheit 9 einerseits (hier mit dem Kolben) mit dem Ladebereich 16 und andererseits über eine Zylinderaufnahme 20 mit dem ersten Schwenkarm 7 (hier mit dem Zylinder) verbunden ist. Die Kolben-Zylinder-Einheit 9 ist durch eine nicht dargestellte Steuereinrichtung ansteuerbar. Natürlich könnte pro Absturzsicherung 3 auch mehr als nur ein Motor vorgesehen sein.

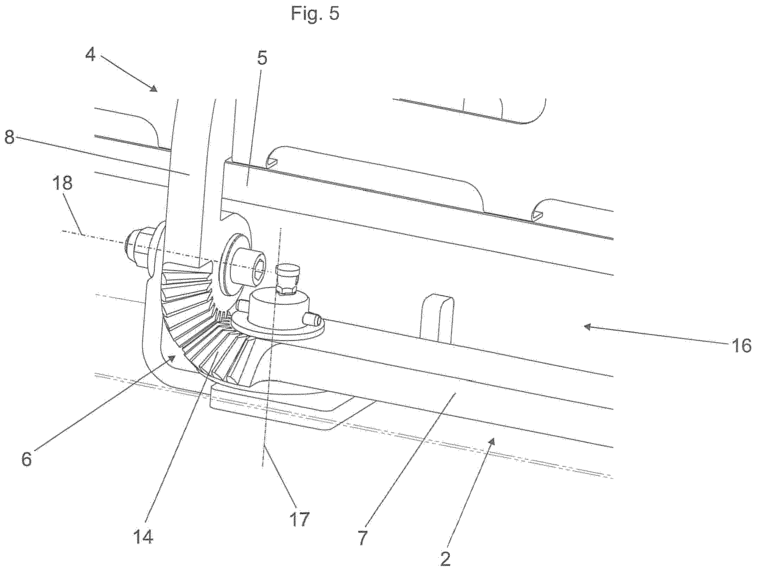

In diesem Ausführungsbeispiel ist eine mechanische Koppelungsvorrichtung 6 zum Koppeln der Verstellvorrichtung 4 und der Bewegungsvorrichtung 2 vorgesehen, welche im Detail in der Fig. 5 gezeigt ist.

In Fig. 4b wurde der Kolben der Kolben-Zylinder-Einheit 9 bereits etwas aus dem Zylinder ausgefahren, was zu einem Verschwenken der Zylinderaufnahme 20 und damit des ersten Schwenkarms 7 und damit über die Koppelungsvorrichtung 6 zu einem Verschwenken des zweiten Schwenkarms 8 geführt hat.

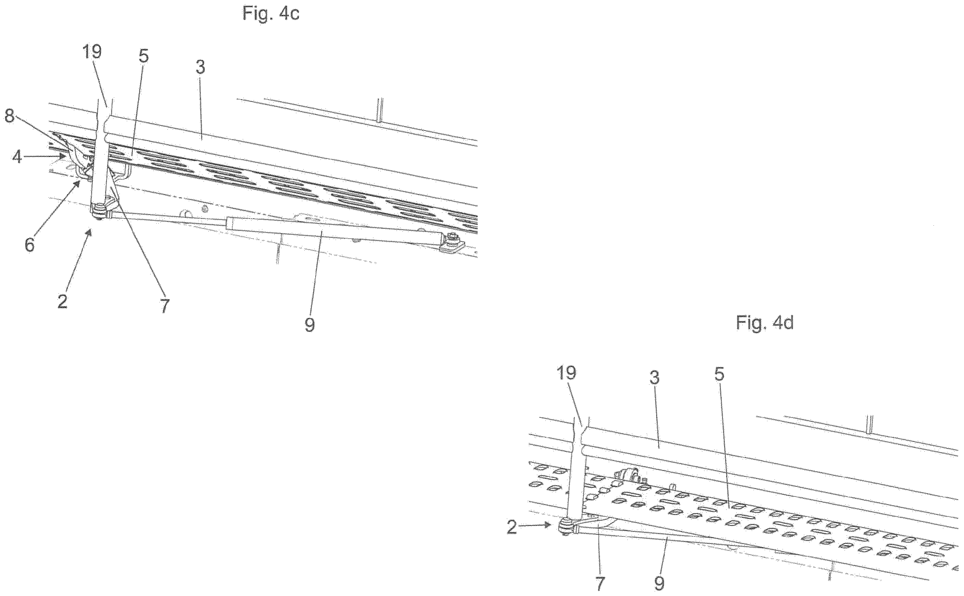

In Fig. 4c wurde der Kolben weiter ausgefahren und damit der erste und der zweite Schwenkarm 7, 8 weiter verschwenkt.

In Fig. 4d ist der Kolben maximal ausgefahren und damit der erste und der zweite Schwenkarm 7, 8 maximal verschwenkt.

Der Übergang in die Verwahrstellung bzw. die Transportstellung ergibt sich bei Betrachtung der Fig. 4 in der Reihenfolge Fig. 4d, 4c, 4b, 4a.

Fig. 5 zeigt eine Detailansicht eines Ausführungsbeispiels der Koppelungsvorrichtung 6. Sie weist hier ein Kegelradgetriebe auf, wobei eines der Kegelräder am ersten Schwenkarm 7 und das andere der Kegelräder am zweiten Schwenkarm 8 angeordnet ist. In diesem Beispiel wurde eine 1:1-Übersetzung für das Kegelradgetriebe gewählt, dies ist nicht unbedingt erforderlich.

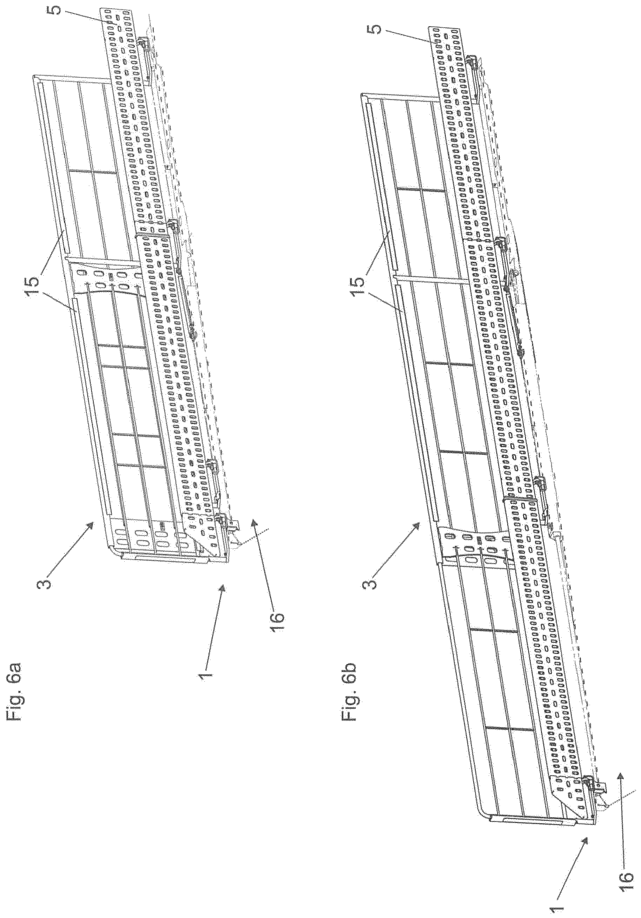

Die Fig. 6a und 6b zeigen eine vorteilhafte Ausführungsform der Erfindung, bei welcher die Absturzsicherung 3 und der Laufsteg 5 in einer Längserstreckung des Ladebereichs 16 längenveränderbar (hier: teleskopierbar) ausgebildet sind. In Fig. 6a sind die Absturzsicherung 3 und der Laufsteg 5 im Zustand minimaler Länge dargestellt. In Fig. 6b sind die Absturzsicherung 3 und der Laufsteg 5 im Zustand maximaler Länge (maximal ausgefahren) dargestellt. Das Verändern der Längen ist unabhängig vom Betriebszustand (Nutz- bzw. Verwahrstellung und/oder Transport- bzw. Ladestellung) möglich.

Ebenfalls erkennbar ist eine Ladebereichbeleuchtung 15 an der Oberkante der Absturzsicherung 3, welche den Vorteil hat, den Ladebereich 16 von den Seiten zu beleuchten und damit beim Be- bzw. Entladen nicht zu blenden. Die Ladebereichbeleuchtung 15 kann auf beiden Seiten oder nur einer der Seiten des Fahrzeugaufbaus 1 vorgesehen sein.

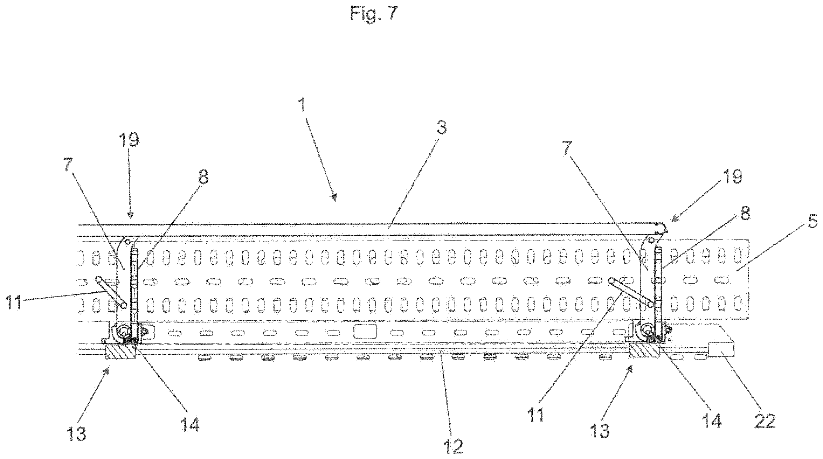

Fig. 7 zeigt ein zweites Ausführungsbeispiel der Erfindung in einer Draufsicht auf den Fahrzeugaufbau 1. Um die durch den Laufsteg 5 verdeckte Konstruktion sichtbar zu machen, wurde in dieser Figur der Laufsteg 5 durchsichtig (strichliert) dargestellt.

Es ist ein Motor (hier: Elektro-oder Hydraulikmotor 22) zum Verstellen bzw. Bewegen des Laufstegs 5 bzw. der Absturzsicherung 3 vorgesehen, der eine Welle 12 antreibt, wobei an der Welle 12 Schneckengetriebe 13 angeordnet sind, die mit Verzahnungen 14 zusammenwirken, wobei die Verzahnungen 14 an den ersten Schwenkarmen 7 angeordnet sind. Die zweiten Schwenkarme 8 sind in diesem Ausführungsbeispiel nicht unmittelbar an den ersten Schwenkarmen 7 angeordnet, sie sind jedoch mit diesen über Koppelstangen 11 mechanisch bzw. bewegungsgekoppelt. Dreht nun z. B. der Motor die Welle 12 im Uhrzeigersinn, so werden die ersten Schwenkarme 7 über die Schneckengetriebe 13 und die Verzahnungen 14 ausgehend von jener Stellung, bei welcher sich die Absturzsicherung 3 in der Transportstellung befindet, in Richtung jener Stellung verschwenkt, bei welcher sich die Absturzsicherung 3 in der Ladestellung befindet. Gleichzeitig verschwenkt der Laufsteg 5 durch die Koppelstange 11 und die zweiten Schwenkarme 8 aus der Verwahrstellung in die Nutzstellung. Dreht der Motor die Welle 12 in die andere Richtung (hier: gegen den Uhrzeigersinn), bewegt sich die Absturzsicherung 3 von der Ladestellung in die Transportstellung und der Laufsteg 5 bewegt sich aus der Nutzstellung in die Verwahrstellung.

Es ist auch eine Mischform der Ausführungsbeispiele der Fig. 4 und 7 denkbar: Statt der in Fig. 4 vorgesehenen Kolben-Zylinder-Einheit 9 wird der in Fig. 7 dargestellte Mechanismus aus Motor und Welle 12 eingesetzt. Die Verzahnung 14 befindet sich bei diesem Ausführungsbeispiel ebenfalls am ersten Schwenkarm 7 und stellt aber hier einen Teil des in Fig. 4 gezeigten Kegelradgetriebes dar, welches ansonsten gemäß der Fig. 4 ausgebildet ist. Es ist keine Koppelstange 11 erforderlich.

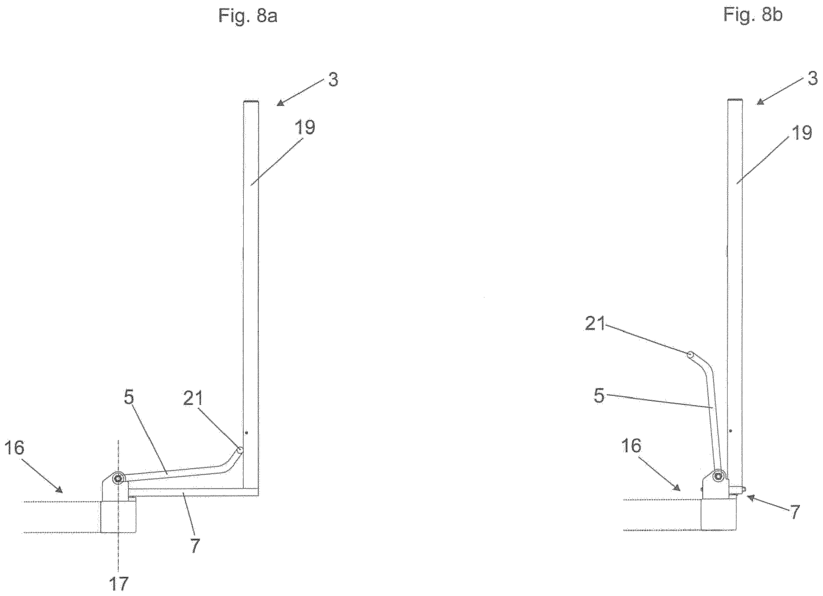

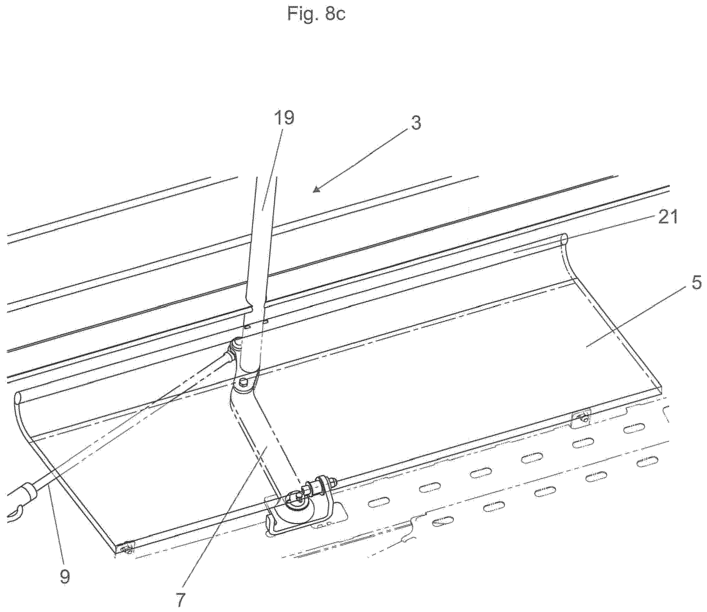

Fig. 8a, 8b und 8c zeigen in zwei Heckansichten bzw. einer perspektivischen Ansicht ein Ausführungsbeispiel, bei welchem als Alternative zur Koppelstange 11 in Bezug auf eine Bewegung von der Nutzstellung in die Verwahrstellung eine Zwangsführung vorgesehen ist. Der erste Schwenkarm 7 ist hier am Ladebereich 16 schwenkbar um eine vertikale Achse 17 gelagert. In Fig. 8a bzw. 8c befinden sich die Absturzsicherung 3 und der Laufsteg 5 in der Ladestellung bzw. Nutzstellung. Der Laufsteg 5 weist an seinem äußeren Ende einen Mitnehmer 21 auf, der in der Ladestellung der Absturzsicherung 3 am Steher 19 der Absturzsicherung 3 anliegt. Beim Bewegen der Absturzsicherung 3 durch einen Motor in Form einer Kolben-Zylinder-Einheit 9 oder eines Elektromotors in Richtung der Transportstellung wird über die Krafteinwirkung des bewegten Stehers 19 auf den Mitnehmer 21 der Laufsteg 5 in Richtung seiner Verwahrstellung verschwenkt, die er in der Fig. 8b eingenommen hat. Insofern stellt der Mitnehmer 21 eine Zwangsführung bei einer Bewegung von der Nutzstellung in die Verwahrstellung dar. In der umgekehrten Richtung kann entweder ein Kraftspeicher (z. B. Feder) vorgesehen sein, um den Laufsteg 5 in Richtung der Nutzstellung zu bewegen oder es kann bereits die Einwirkung der Schwerkraft zur Durchführung dieser Bewegung ausreichend sein.

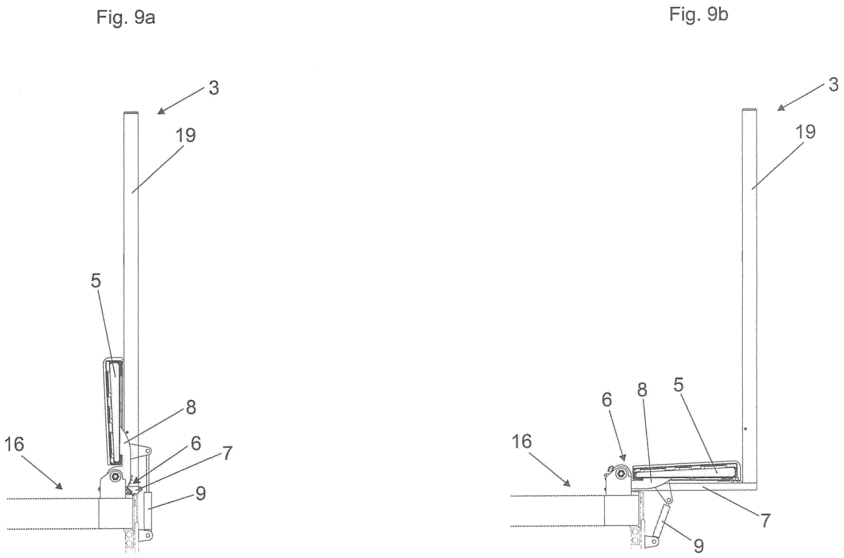

Fig. 9a und 9b zeigen eine Alternative zur Anordnung der in den Fig. 4a bis 4d gezeigten Kolben-Zylinder-Einheit 9. Hier wird der zweite Schwenkarm 8 unmittelbar durch die Kolben-Zylinder-Einheit 9 angetrieben und der erste Schwenkarm 7 wird durch die Koppelungsvorrichtung 6 mitbewegt.

Alternativ zu der in den Fig. gezeigten mechanischen Koppelungsvorrichtung 6 könnte auch eine rein elektronische Koppelung (Synchronisierung) der Bewegungsvorrichtung 2 und der Verstellvorrichtung 4 erfolgen, vor allem, wenn diese jeweils einen eigenen Motor aufweisen.

### Bezugszeichenliste:

- 1: Fahrzeugaufbau
- 2: Bewegungsvorrichtung
- 3: Absturzsicherung
- 4: Verstellvorrichtung
- 5: Laufsteg
- 6: Mechanische Koppelungsvorrichtung
- 7: Erster Schwenkarm
- 8: Zweiter Schwenkarm
- 9: Kolben-Zylinder-Einheit
- 10: Schneckenantrieb
- 11: Koppelstange
- 12: Welle
- 13: Schneckengetriebe
- 14: Verzahnung
- 15: Ladebereichbeleuchtung
- 16: Ladebereich
- 17: Vertikale Achse
- 18: Horizontale Achse
- 19: Steher
- 20: Zylinderaufnahme
- 21: Mitnehmer
- 22: Elektro- oder Hydraulikmotor

## Patentansprüche

1. Fahrzeugaufbau (1) mit einem durch eine Absturzsicherung (3) sicherbaren Ladebereich (16), wobei die Absturzsicherung (3) durch eine Bewegungsvorrichtung (2) zwischen einer Transportstellung und einer Ladestellung hin und her bewegbar ist und einem durch eine Verstellvorrichtung (4) zwischen einer Verwahrstellung und einer Nutzstellung verstellbaren Laufsteg (5), wobei die Bewegungsvorrichtung (2) und die Verstellvorrichtung (4) derart miteinander gekoppelt sind, dass bei einer Betätigung der Verstellvorrichtung (4) eine Betätigung der Bewegungsvorrichtung (2) erfolgt oder umgekehrt, **dadurch gekennzeichnet, dass** die Verstellvorrichtung (4) wenigstens einen - vorzugsweise um eine horizontale Achse (18) verschwenkbaren - zweiten Schwenkarm (8) aufweist, der einerseits mit dem Laufsteg (5) und andererseits entweder mit dem Ladebereich (16) oder mit einem ersten Schwenkarm (7) der Bewegungsvorrichtung (2) verbunden ist.

2. Fahrzeugaufbau nach Anspruch 1, wobei die Bewegungsvorrichtung (2) wenigstens einen
- vorzugsweise um eine vertikale Achse (17) verschwenkbaren
- ersten Schwenkarm (7) aufweist, der einerseits mit dem Ladebereich (16) und andererseits mit der Absturzsicherung (3) verbunden ist.

3. Fahrzeugaufbau nach wenigstens einem der vorangehenden Ansprüche, wobei die Bewegungsvorrichtung (2) und/oder die Verstellvorrichtung (4) motorisch angetrieben ist bzw. sind.

4. Fahrzeugaufbau nach Anspruch 3, wobei ein Motor für die Bewegungsvorrichtung (2) und die Verstellvorrichtung (4) in Form einer hydraulischen Kolben-Zylinder-Einheit (9) oder in Form eines Schneckenantriebes (10) vorgesehen ist.

5. Fahrzeugaufbau nach wenigstens einem der vorangehenden Ansprüche, wobei eine mechanische Koppelungsvorrichtung (6) zum Koppeln der Verstellvorrichtung (4) und der Bewegungsvorrichtung (2) vorgesehen ist.

6. Fahrzeugaufbau nach Anspruch 5, wobei die mechanische Koppelungsvorrichtung (6) in Form eines mechanischen Getriebes, vorzugsweise in Form eines Kegelradgetriebes, ausgebildet ist.

7. Fahrzeugaufbau nach Anspruch 5, wobei die mechanische Koppelungsvorrichtung (6) in Form einer Koppelstange (11) ausgebildet ist.

8. Fahrzeugaufbau nach Anspruch 5, wobei die mechanische Koppelungsvorrichtung (6) in Form eines Mitnehmers (21) ausgebildet ist.

9. Fahrzeugaufbau nach wenigstens einem der vorangehenden Ansprüche, wobei sich die Absturzsicherung (3) und/oder der Laufsteg (5) über eine gesamte Länge des Ladebereichs (16) erstrecken.

10. Fahrzeugaufbau nach wenigstens einem der vorangehenden Ansprüche, wobei die Absturzsicherung (3) und/oder der Laufsteg (5) in einer Längserstreckung des Ladebereichs (16) längenveränderbar, vorzugsweise teleskopierbar, ausgebildet ist bzw. sind.

11. Fahrzeugaufbau nach wenigstens einem der vorangehenden Ansprüche, wobei eine Ladebereichbeleuchtung (15) vorgesehen ist, welche - vorzugsweise an einer Oberkante der Absturzsicherung (3) - an der Absturzsicherung (3) angeordnet ist.

12. Fahrzeug, insbesondere Lastkraftwagen oder Anhänger für ein Straßenfahrzeug, mit einem Fahrzeugaufbau (1) nach wenigstens einem der vorangehenden Ansprüche.

## Claims

1. A vehicle structure (1) having a load region (16) which can be safeguarded by a fall protection means (3), wherein the fall protection means (3) is reciprocable by a movement device (2) between a transport position and a loading position, and a walkway (5) displaceable by an adjusting device (4) between a storage position and a use position, wherein the movement device (2) and the adjusting device (4) are coupled together in such a way that upon actuation of the adjusting device (4) actuation of the movement device (2) is effected or vice-versa, **characterised in that** the adjusting device (4) has at least one second pivot arm (8) - which is preferably pivotable about a horizontal axis (18) - and which is connected on the one hand to the walkway (5) and on the other hand either to the load region (16) or to a first pivot arm (7) of the movement device (2).

2. A vehicle structure according to claim 1 wherein the movement device (2) has at least one first pivot arm (7) - which is preferably pivotable about a vertical axis (17) - and which is connected on the one hand to the load region (16) and on the other hand to the fall protection means (3).

3. A vehicle structure according to at least one of the preceding claims wherein the movement device (2) and/or the adjusting device (4) is or are motor-driven.

4. A vehicle structure according to claim 3 wherein there is provided a motor for the movement device (2) and the adjusting device (4) in the form of a hydraulic piston-cylinder unit (9) or in the form of a worm drive (10).

5. A vehicle structure according to at least one of the preceding claims wherein there is provided a mechanical coupling device (6) for coupling the adjusting device (4) and the movement device (2).

6. A vehicle structure according to claim 5 wherein the mechanical coupling device (6) is in the form of a mechanical transmission, preferably in the form of a bevel gear transmission.

7. A vehicle structure according to claim 5 wherein the mechanical coupling device (6) is in the form of a coupling bar (11).

8. A vehicle structure according to claim 5 wherein the mechanical coupling device (6) is in the form of an entrainment means (21).

9. A vehicle structure according to at least one of the preceding claims wherein the fall protection means (3) and/or the walkway (5) extend over an entire length of the load region (16).

10. A vehicle structure according to at least one of the preceding claims wherein the fall protection means (3) and/or the walkway (5) are adapted to be variable in length, preferably telescopically, in a longitudinal extent of the load region (16).

11. A vehicle structure according to at least one of the preceding claims wherein there is provided a load region lighting means (15) which is arranged - preferably at an upper edge of the fall protection means (3) - on the fall protection means (3).

12. A vehicle, in particular a truck or a trailer for a road vehicle, comprising a vehicle structure (1) according to at least one of the preceding claims.

## Revendications

1. Carrosserie de véhicule (1) avec une zone de chargement (16) pouvant être sécurisée à travers un système de sécurité antichute (3), dans laquelle le système de sécurité antichute (3) peut effectuer des mouvements de va-et-vient entre une position de transport et une position de chargement au moyen d'un dispositif de déplacement (2), et avec une passerelle (5) pouvant être ajustée entre une position de rangement et une position d'utilisation au moyen d'un dispositif d'ajustement (4), dans laquelle le dispositif de déplacement (2) et le dispositif d'ajustement (4) sont couplés de telle manière l'un à l'autre que, lors d'un actionnement du dispositif d'ajustement (4), un actionnement du dispositif de déplacement (2) est effectué, ou inversement, **caractérisée en ce que** le dispositif d'ajustement (4) présente au moins un deuxième bras de pivotement (8), pouvant pivoter de préférence autour d'un axe horizontal (18), qui est relié d'une part à la passerelle (5) et d'autre part soit à la zone de chargement (16) soit à un premier bras de pivotement (7) du dispositif de déplacement (2).

2. Carrosserie de véhicule selon la revendication 1, dans laquelle le dispositif de déplacement (2) présente au moins un premier bras de pivotement (7), pouvant pivoter de préférence autour d'un axe vertical (17), qui est relié d'une part à la zone de chargement (16) et d'autre part au système de sécurité antichute (3).

3. Carrosserie de véhicule selon au moins l'une quelconque des revendications précédentes, dans laquelle le dispositif de déplacement (2) et/ou le dispositif d'ajustement (4) est ou sont entraînés de manière motorisée.

4. Carrosserie de véhicule selon la revendication 3, dans laquelle un moteur est prévu pour le dispositif de déplacement (2) et le dispositif d'ajustement (4) sous la forme d'une unité piston-cylindre (9) hydraulique ou sous la forme d'un entraînement à vis sans fin (10).

5. Carrosserie de véhicule selon au moins l'une quelconque des revendications précédentes, dans laquelle un dispositif de couplage mécanique (6) est prévu pour coupler le dispositif d'ajustement (4) et le dispositif de déplacement (2).

6. Carrosserie de véhicule selon la revendication 5, dans laquelle le dispositif de couplage mécanique (6) est réalisé sous la forme d'un engrenage mécanique, de préférence sous la forme d'un engrenage à roues coniques.

7. Carrosserie de véhicule selon la revendication 5, dans laquelle le dispositif de couplage mécanique (6) est réalisé sous la forme d'une tige de couplage (11).

8. Carrosserie de véhicule selon la revendication 5, dans laquelle le dispositif de couplage mécanique (6) est réalisé sous la forme d'un entraîneur (21).

9. Carrosserie de véhicule selon au moins l'une quelconque des revendications précédentes, dans laquelle le système de sécurité antichute (3) et/ou la passerelle (5) s'étendent sur une longueur totale de la zone de chargement (16).

10. Carrosserie de véhicule selon au moins l'une quelconque des revendications précédentes, dans laquelle le système de sécurité antichute (3) et/ou la passerelle (5) est ou sont réalisés dans une extension longitudinale de la zone de chargement (16) de manière variable en longueur, de préférence de manière télescopique.

11. Carrosserie de véhicule selon au moins l'une quelconque des revendications précédentes, dans laquelle un éclairage de zone de chargement (15) est prévu, lequel est disposé au niveau du système de sécurité antichute (3), de préférence au niveau d'une arête supérieure du système de sécurité antichute (3).

12. Véhicule, en particulier camion ou remorque pour un véhicule routier, avec une carrosserie de véhicule (1) selon au moins l'une quelconque des revendications précédentes.
